# EUROPEAN PATENT SPECIFICATION

(11) **EP 0 581 493 B1**
(45) Date of publication and mention of the grant of the patent: **06.03.1996**
(21) Application number: 93305548.5
(22) Date of filing: 15.07.1993
(51) Int. Cl.: B23H 7/10

(54) **Wire refeeding device and method for wire-cut electroerosion apparatus**
Verfahren und Ausrüstung für den automatischen Übergang des zugeführten Drahtes in einer Funkenerosionsmaschine
Méthode de appareil pour le transfert automatique du fil sur une machine d'usinage par électroérosion

(30) Priority: 31.07.1992 JP 225248/92
(43) Date of publication of application: 02.02.1994
(73) Proprietor: SODICK CO., LTD., Yokohama Kanagawa 222 (JP)
(72) Inventor: Okazaki, Shuji, c/o Sodick Co., Ltd., Sakai-gun, Fukui 919-05 (JP); Urushizaki, Kozo, c/o Sodick Co., Ltd., Sakai-gun, Fukui 919-05 (JP)
(74) Representative: Kensett, John Hinton

(56) References cited:
- CH-A- 644 541
- PATENT ABSTRACTS OF JAPAN vol. 15, no. 42 (M-1076)31 January 1991 & JP-A-22 79 221 (SEIBU ELECTRIC & MACHCO LTD) 15 November 1990
- PATENT ABSTRACTS OF JAPAN vol. 12, no. 386 (M-754)14 October 1988 & JP-A-63 139 616 (MITSUBISHI ELECTRIC CORP.) 11 June 1988
- PATENT ABSTRACTS OF JAPAN vol. 0, no. 088 (E-240)21 April 1984 & JP-A-59 008 499 (NIPPON DENKI KK) 17 January 1984

## Description

The present invention relates to a wire-cut electroerosion apparatus using an electrode wire. More specifically, the present invention relates to a wire refeeding device and a method for refeeding a new wire, unwound from a spare wire bobbin, into a machining slit in a workpiece at a predetermined tension after a machining operation with a first wire.

In a wire-cut electroerosion apparatus for performing electrical discharge machining an electrode wire is continuously fed from a wire bobbin to a machining slit at a predetermined rate of travel during machining. Therefore, during a long period of automatic operation a bobbin runs short or empties, and it is required to change to a new wire unwound from a spare wire bobbin and to refeed the new wire to the machining slit.

To change a current wire of a current bobbin for a new wire of a spare wire bobbin without joining the current and new wires, a wire-cut electroerosion apparatus shown in Japanese Patent Publication No 59-8499/1984 has, for example, two wire travelling routes which include respective break devices, pairs of feed rollers, rod electrodes for melting a wire and upper wire guides. A first wire is supplied along one wire travelling route to the inlet of a suction pipe which guides the first wire through a workpiece to a pair of receiving rollers. After cutting the desired contour on the workpiece using the first wire, the first wire is cut and a new wire supplied along the other wire travelling route is guided through the workpiece to the pair of receiving rollers by means of the suction pipe.

Japanese Patent Application Laid-Open No 63-139616/1988 also discloses a wire-cut electroerosion apparatus having multiple wire bobbin mounting means, wire tension applying means, and wire supplying means including respective wire guide means for automatically setting and supplying multiple wire electrodes. Further, the apparatus is provided with wire guide moving means for attachably and movably supporting one of a plurality of wire supplying means whereby a wire electrode to be used is automatically and selectively changed.

In these prior art systems more than two wire travelling routes are provided. This complicated construction tends to increase the cost. Further, it is troublesome to lead multiple wires from bobbins to the upper wire positioning guides along wire travelling routes, and to respectively stretch the wire on a number of rollers by hand in preparing for machining.

Japanese Patent Application Laid-Open No 2-279221/1990 discloses a wire-cut electroerosion apparatus which is provided with wire joining means proceeding a wire tension applying device. Clamping means attached on a carriage clamp the top of a new wire pulled out from a spare wire bobbin. A first wire halts and is clamped. The carriage moves to cross the first wire and the new wire. The wire joining means joins the first wire to the new wire. Then a cutter preceding the wire joining means cuts the joined wire off the first bobbin. The wire joint is fed forward along the wire travelling route including the wire tension applying device. A pair of joint cutters cut the joint before a pipe guide for guiding the wire into an upper wire positioning guide and a workpiece. After the joint is removed, the wire is supplied into the pipe guide.

Thus, in this system two wires are crossed and joined together. It has the advantage that the wire joining operation is easy. However, a cross section of the joint is larger, like a thread splicing device in a spinning machine, and two surplus parts extended beyond the joint are left. Therefore, the joint of wire may be snatched by rollers and the wire tension applying device in the wire travelling route. Further, the joint must be removed to pass through the pipe guide and a machining slit in the workpiece. In general, a wire-cut electroerosion apparatus is provided with an automatic wire threading device for making it possible to cut multiple closed contours on the workpiece or by way of precaution against wire breakage. In an automatic wire threading device using a pipe guide the inner diameter of the pipe guide is slightly larger than the wire diameter to precisely guide the leading end of wire into a start hole or the machining slit in the workpiece. For example, the inner diameter of the pipe guide is generally about 1 mm when using wire with a diameter of 0.2 mm.

Moreover, the wire joining means cannot detect whether the wire have been reliably jointed together. Also, it has no means to automatically reset the wires to retry the wire joining operation if the wire is burned out at the crossed point due to a large current flow or if the wires are not adequately joined together.

In addition, this prior apparatus has a structure such that a new wire can be pulled out from either right or left bobbins. Therefore, it is impossible to perform a next wire change if the empty bobbin is replaced with a new spare wire bobbin so that an automatic machine operation supplying a spare wire bobbin is not easy.

Thus, such previous wire joining means were not always sufficiently reliable in operation when used for wire refeeding devices. It was also difficult to achieve complete automatic operation.

CH-A 644 541 discloses a system in which a plurality of wires are wound on a respective plurality of bobbins, These wires have to be led to a wire positioning guide along multiple wire transport paths by hand, which can be cumbersome since it must be done manually.

An object of the present invention is to provide a wire refeeding device and method for wire-cut electroerosion apparatus in which the new wire being joined to the present wire can be smoothly fed forward along the wire travelling route, including the wire tension applying device, to reach the machining slit.

It is another object of the present invention to provide a wire refeeding method for checking and retrying the joining of wires, thereby increasing the reliability of the wire joining.

It is further an object of the invention to provide a wire refeeding device and method in which the joined wire is smoothly fed into the machining slit without removing the joint of wires.

Additional objects and advantages and novel features of the invention will be set forth in part in the description which follows, and in part will become apparent to those skilled in the art upon examination of the following or may be learned by practice of the invention. The objects and advantages of the invention may be realized and attained by means of the instrumentalities and combinations particularly pointed out in the appended claims.

According to the present invention there is provided a wire refeeding device for a wire-cut electroerosion apparatus having a first wire, a second wire, a first bobbin carrying said first wire and a second bobbin carrying said second wire, said first and second bobbins being replaceable with an alternate bobbin for refeeding said second wire forward into a machining slit in a workpiece after stopping the travelling of said first wire along a wire travelling route, comprising: a first cutter arranged on said wire travelling route for cutting said first wire off said first bobbin; and characterised by a first clamper arranged on said wire travelling route for clamping a tail end of said first wire; a table adjacent said first clamper comprising a second clamper for clamping a leading end of said second wire drawn out from said second bobbin along a waiting path, said table being movable to traverse said wire travelling route whereby said first and second clampers are opposed to each other; a pre-loader for actuating either one of said first and second clampers toward the other to cause the leading end of said second wire and the tail end of said first wire to abut against each other; a joining circuit for joining the butted wires; and means for causing the joined wire to travel forward into said machining slit along said wire travelling route.

Preferably, the welding circuit is connected to the clampers to energize the wires therebetween with current.

In a preferred embodiment of the invention, a pair of clamp rollers may be provided for feeding the first wire forward/backward so that the tail end thereof is positioned to be slightly protruded from the clamper for the first wire. Another pair of clamp rollers may also be provided on the movable table for feeding the second wire forward/backward so that the leading end thereof is positioned to be slightly protruded from the clamper for the second wire. Preferably, the cutter for the first wire is provided on said table. Another cutter may be provided for trimming a tip of the second wire prior to the joining of the wires. Additionally, an annealing circuit may be provided for annealing part of the joined wire, including the wire joint. Preferably, a train of rollers may be provided on the wire travelling route for rolling the wire joint, thereby decreasing the joint to allow it to pass smoothly through the machining slit.

According to a second aspect of the present invention there is provided a method of refeeding a wire for a wire-cut electroerosion apparatus having a first wire, a second wire, a first bobbin winding the first wire, a spare (second) bobbin winding the second wire, a first clamper and a second clamper, both of the bobbins being replaceable with an alternate bobbin for refeeding the second wire forward into a machining slit in a workpiece after stopping the travelling of the first wire along a wire travelling route, by (a) cutting the first wire off the first bobbin, (b) clamping a tail end of the first wire on the wire travelling route by the first clamper, (c) clamping a leading end of the second wire drawn out from the spare bobbin outside the wire travelling route by the second clamper, (d) moving the second clamper to oppose the tail end of the first wire and the leading end of the second wire to each other, (e) getting the leading end of the second wire and the tail end of the first wire butted against each other, (f) joining the butted wires together, and (g) restarting the travelling of the joined wire into the machining slit through the wire travelling route.

In preferred embodiments the step (f) includes energizing the wires between the clampers with current. A tip of the second wire may be trimmed prior to the joining of wires. The joined wire in the vicinity of the joint may be annealed. A diameter of the joint of wires may be decreased so that the joint may smoothly pass through the machining slit.

According to a further preferred embodiment of the present invention there is provided a method of refeeding a wire for a wire-cut electroerosion apparatus having a first wire, a second wire, a first bobbin, and a spare second bobbin winding the second wire for refeeding the second wire forward into a machining slit in a workpiece after stopping the travelling of the first wire along a wire travelling route, by (A) cutting the first wire off the present bobbin, (B) getting the leading end of the second wire and the tail end of the first wire butted against each other, (C) joining the butted wires together, (D) checking the joining of wires, and (E) restarting the travel of the joined wire into the machining slit through the wire travelling route.

In preferred embodiments step (D) includes detecting the existence of an electrical conductivity between the wires applying tensile strength on the joint of wires. Alternatively, step (D) includes detecting the existence of feed motion of one of the wires when feeding the other wire away from said one. Tips of the present and new wires may be trimmed and the butt joining may be retried when failure of the wire joint is detected.

Embodiments of the present invention will now be described, by way of example only, with reference to the accompanying drawings, in which:
Figure 1 illustrates a front view of a wire refeeding device in a wire-cut electroerosion apparatus embodying the present invention;
Figure 2 illustrates a top view of the clamper;
Figure 3 illustrates a schematic view showing the construction of the clamper actuated along a wire axis;
Figure 4 illustrates a schematic view of a pair of clamp rollers;
Figure 5 is a flowchart showing the preliminary operation on a new wire;
Figure 6 is a flowchart showing the preliminary operation on a present wire;
Figure 7 illustrates a front view of the embodiment of the present invention in a preliminary operation;
Figure 8 is a flowchart showing an operation of wire joining and its confirmation;
Figure 9 illustrates a front view of the embodiment of the present invention in the operation of wire joining and its confirmation;
Figure 10 is a flowchart showing a retry operation;
Figure 11 illustrates a front view of the embodiment of the present invention in the retry operation;
Figure 12 is an enlarged view showing the butting state of the sheared ends of wires;
Figure 13 is an enlarged view showing the joining state of wire; and
Figure 14 is a circuit diagram showing a basic circuit of a current supplying device for welding and annealing the wire.

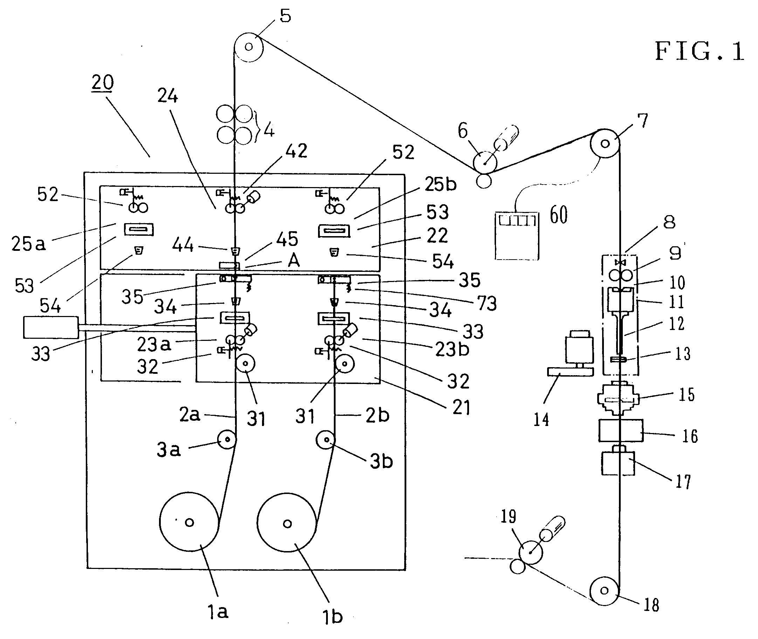

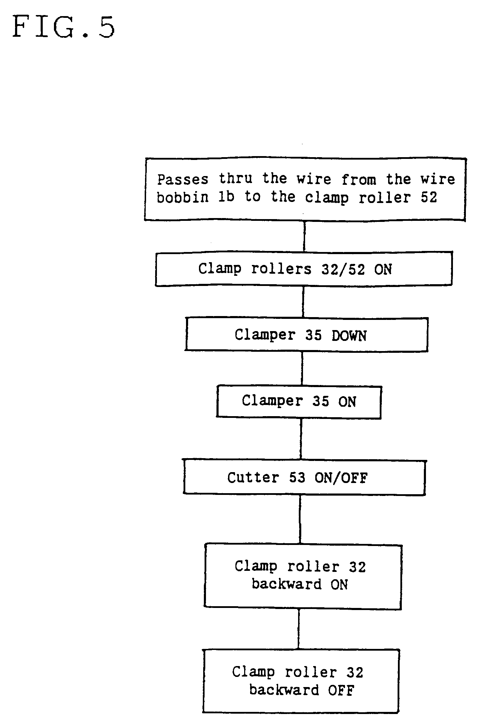

Figures 1 to 4 are provided to explain the wire refeeding device according to an embodiment of the present invention. Figures 5 to 11 are provided to explain the wire changing method of the present invention associated with the operation of the device shown in Figure 1, including the checking operation and the re-joining operation in the event of a failed joining operation.

Figure 1 shows a wire refeeding device in a wire-cut electroerosion apparatus according to an embodiment of the present invention. A present wire 2a is wound around a bobbin 1a and a new wire 2b is wound around a spare bobbin 1b. The present wire 2a unwound from the bobbin 1a is fed through a guide pulley 3a to a wire joining device 20 and is fed forward along a wire travelling route including a train of rollers 4, a pulley 5, a wire tension applying device 6 and a pulley 7. The pulleys 5 and 7 are provided for changing the wire travelling direction. A wire residue counter 60 is connected with the pulley 7 to detect a residue of a wire in use. In the wire travelling route a wire tension detector, a wire breakage detector and a number of pulleys and rollers may be provided, which are omitted in the figure.

The wire 2a is further fed forward to an automatic wire threading device having a wire guide 8, a pair of feeding rollers 9, a pressured fluid chamber 11 and a pipe guide 12. A guide 10 is provided on the pressured fluid chamber 11 for preventing fluid backflow. In a wire threading operation a pressured fluid is forced into the pipe guide 12 through the chamber 11 to align and advance the wire 2a. A cutter 13 and a wire tip disposer 14 are provided directly under the pipe guide 12 to cut out a leading end of a wire when unsuccessfully threading a wire into the machining slit in a workpiece 16. This automatic wire threading device using the pipe guide 12 is a conventional one.

The workpiece 16 is placed between the upper wire guide block 15 and a lower wire guide block 17 having respective wire positioning guides and current pick-ups as well-known. The machining slit is formed between the workpiece 16 and the travelling wire 2a and is filled with a dielectric fluid. The wire 2a is fed to the machining slit at a predetermined rate of travel and in a predetermined tension during machining. The used wire is taken up by a wire take-up device 19 through a roller 18.

The wire joining device 20 includes a table 21 movable from side to side in the figure, and a fixed base 22 which are arranged on a travelling route of the present wire 2a pulled from present bobbin 1a. The table 21 and the base 22 are adjacent to each other and the table 21 is closer to the bobbins 1a and 1b. Two incoming units 23a and 23b are provided with the table 21 to form feeding directions of the wires 2a and 2b orthogonal to the moving direction of the table 21, respectively. The moving stroke of the table 21 in the right and left directions in the figure is equal to the pitch between two incoming units 23a and 23b. One of the incoming units 23a and 23b opposes an outgoing unit 24 provided on the base 22 at stroke limits of the table 22. Preferably, an air cylinder may be provided to move the table 21.

Preparatory units 25a and 25b are provided on the base 22 at its sides, keeping the same distance from the outgoing unit 24 as that between the incoming units 23a and 23b. The incoming units 23a and 23b consist of a guide pulley 31, a pair of clamp rollers 32, a cutter 33, a wire guide 34 and a clamper 35, in that order from the bobbin side. Each guide pulley 31 is a free rotating pulley to keep respective alignments of the wires 2a and 2b in the incoming units 23a and 23b when moving the table 21.

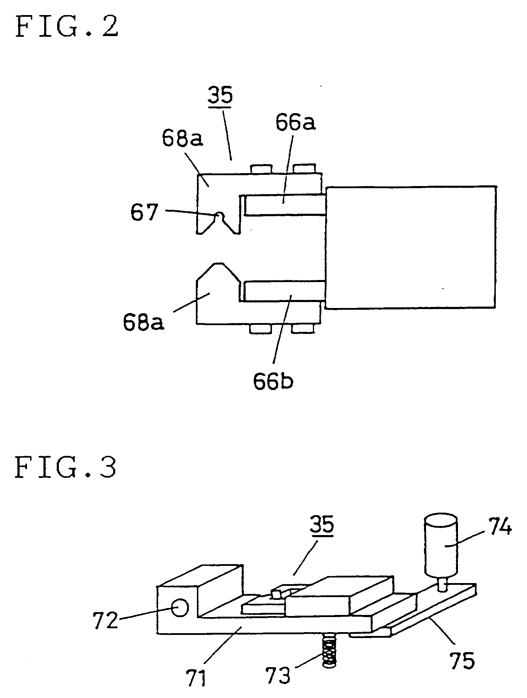

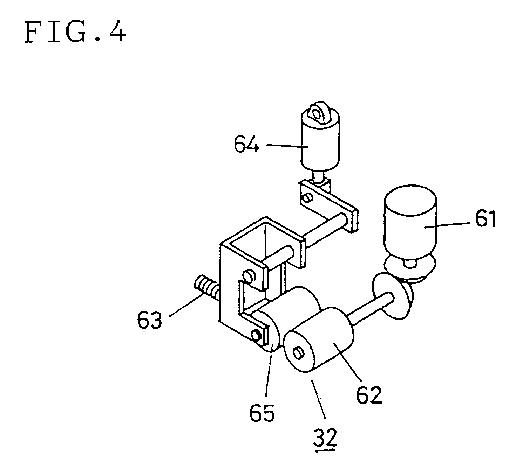

A pair of clamp rollers 32, as shown in Figure 4, consists of a driving roller 62 which is connected to a motor 61 to roll at a fixed position and a following roller 65 which is pushingly contacted to the driving roller 62 by a spring 63. The following roller 62 can be set apart from the driving roller 62 by an air cylinder 64. The cutter 33 is a shearing cutter constructed so that a shearing blade moves orthogonally to the wire axis by an air cylinder (not illustrated). The wire guide 34 for guiding a wire has a small bore divergent from its centre to its upper and lower ends. The clamper 35, as shown in Figure 2, has jaws 66a and 66b which open and close by a built-in air cylinder and has fingers 68a and 68b. On a tip of the finger 68a a V-shaped groove is formed having a recess 67 at its bottom while on a tip of the finger 68b a V-shaped block is formed. Fingers 68a and 68b oppose each other and are attached to jaws 66a and 66b, respectively. In this arrangement, when the jaws 66a and 66b close, a wire is positioned and gripped at the recess 67 with a smaller force than that of the clamp roller 32.

In the embodiment, the clamper 35 in the incoming unit advances and retracts with respect to a clamper 45 in the outgoing unit 24. As shown in Figure 3, the clamper 35 is fixed on a bracket 71 swingably attached on the table 21 through a pin 72. A spring 73 is attached on the bracket 71. Further, an air cylinder 74 is provided in the rear of the table 21 and a jaw 75 connected to the air cylinder 74 extends to the bottom of the bracket 71. In this arrangement, the clamper 35 advances toward the opposing clamper 45 by a spring 73 and retracts therefrom when an air cylinder 74 is actuated.

The outgoing unit 24 consists of the clamper 45, a wire guide 44 and a pair of clamp rollers 42, in that order from the bobbin side. Apart from the clamper 45 being fixedly attached on the base 22, the elements 42 and 45 have the same construction as elements 32 and 35, respectively.

The preparatory units 25a and 25b consist of a wire guide 54, a cutter 53 and a pair of clamp rollers 52, in that order from the bobbin side. The wire guide 54 and the cutter 53 have the same construction as the wire guide 34 and the cutter 33 in the incoming unit while the pair of clamp rollers 52 does not include the driving motor 61.

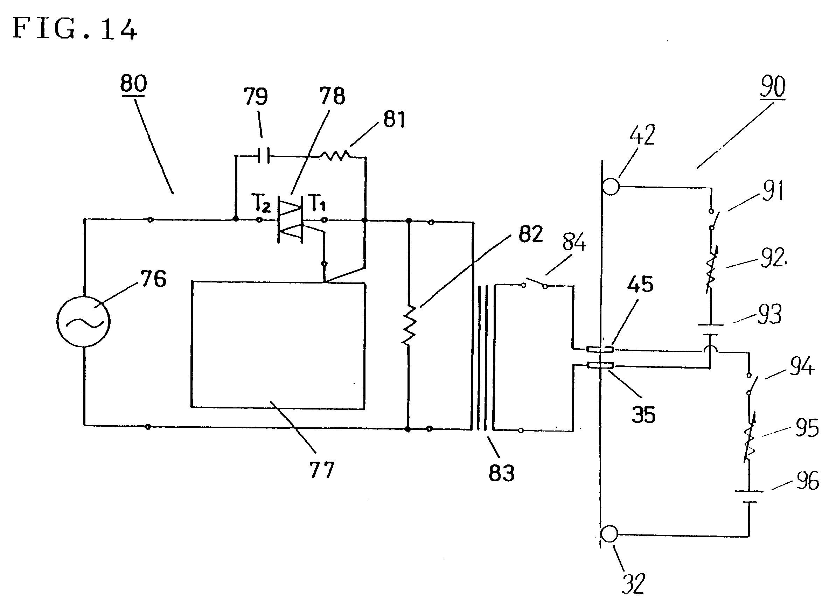

In this embodiment, the clampers 35 and 45 form electrodes for supplying the welding current to the butted wire portion. Normally it is desirable for the clampers 35 and 45 to share the function as the electrodes. As shown in Figure 14, a welding current supply device 80 connected to the electrodes 35 and 45 includes A.C. power source 76, a gate oscillating circuit 77, a triac 78, a capacitor 79, resistor 81 and 82, a transformer 83 and a switch 84. The clamp rollers 42 and 32 also from electrodes for an annealing current supply device 90 supplying the annealing current to the vicinity of the joint of wires. In this embodiment, the annealing current supply device 90 consists of two circuits, one circuit connected to the clamp roller 42 and the clamper 35 including a switch 91, a variable resistor 92 and a power source 93, and the other circuit connected to the clamp roller 32 and the clamper 45 including a switch 94, a variable resistor 95 and a power source 96. The welding current supply device 80 and the annealing device are well-known and its details are omitted.

Referring to Figures 5 to 11 the operation of wire refeeding is described.

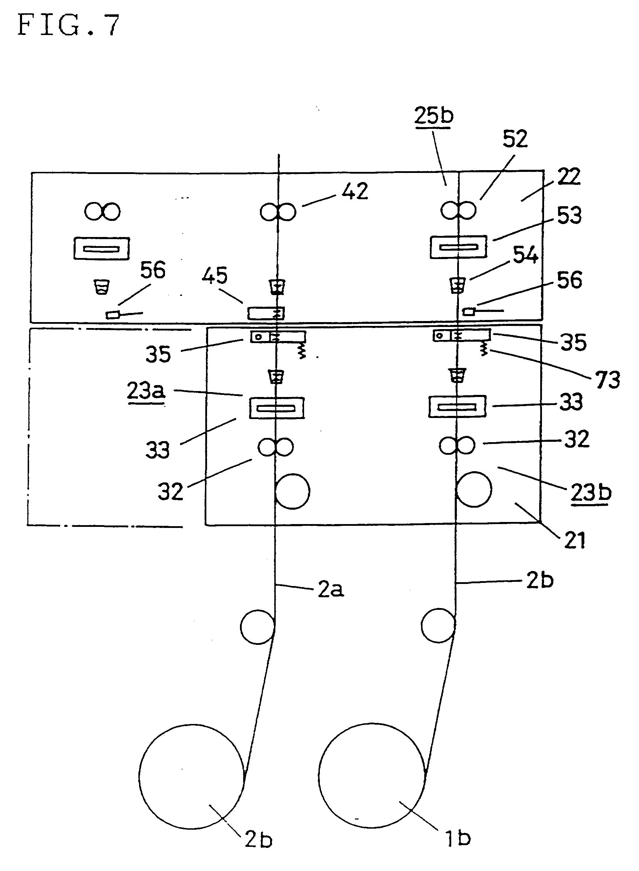

Prior to the wire joining operation, the new wire setting operation is carried out using the incoming unit 23b and the preparatory unit 25b with the table 21 positioned at its right stroke limit, as best shown in Figure 7. This new wire setting operation is described referring to a flowchart shown in Figure 5 as follows.

First, the new wire 2b is pulled out from the spare bobbin 1b mounted at a predetermined position to pass through the incoming unit 23b into the preparatory unit 25b. Then, pairs of clamp rollers 52 and 32 are closed to pinch the new wire 2b. The clamp rollers 32 feed the wire 2b downward by a short amount to apply a tensile force on the wire between the clamp rollers 52 and 32. Alternatively, the clamp rollers 52 may feed the wire 2b upward by a short amount or the spare bobbin 1b may wind the wire 2b by a short amount. At this time, the clamper 35 is in a lowered position due to actuating the air cylinder 74.

Next, the cutter 53 cuts off the leading edge of the wire 2b. The clamp rollers 32 feed the wire 2b downward and then stop feeding when the sheared leading end of the wire reaches a position slightly protruded from the clamper 35. As shown in Figure 7, a sensor 56 is provided for detecting the sheared end to stop the clamp rollers 32.

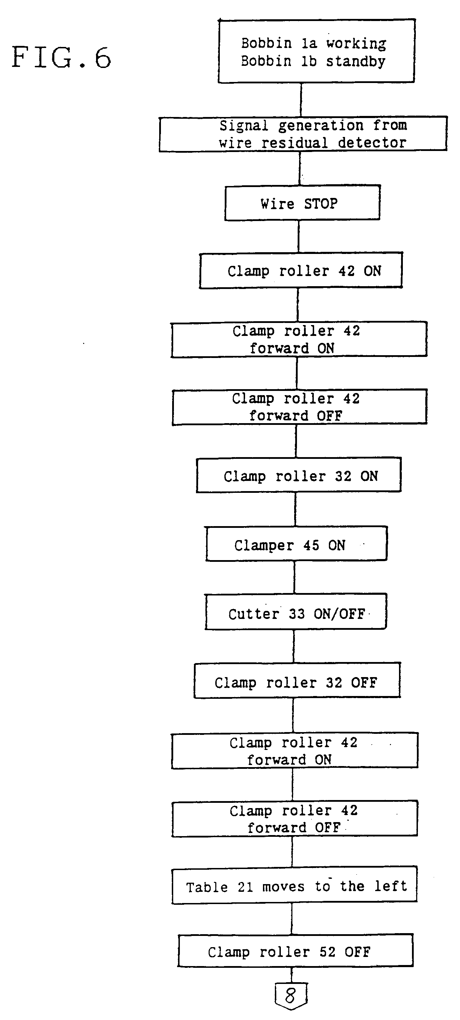

At this stage in the first step of a flowchart shown in Figure 6, the wire 2a is being unwound from the bobbin 1a to travel continuously into the electrical discharge machining gap while the new bobbin 1b is a stand by. When the wire residue counter 60 detects the residual amount of the wire 2a becoming less, the wire take-up device 19 stops the travel of wire. The pair of clamp rollers 42 in the outgoing unit 24 closes and feeds the wire 2a upward for a desired amount so that the wire 2a is slack above the clamp rollers 42. This desired slack of the wire 2a is provided for feeding the wire 2a downward to the incoming unit in the retry operation described later.

The operation for cutting the wire 2a off the bobbin 1a and positioning the sheared tail end is carried out using the outgoing unit 24 and the incoming unit 23a. After the clamp rollers 42 stop feeding the wire 2a upward, the clamp rollers 32 close to pinch the wire 2a. The clamp rollers 32 feed the wire 2a downward for a short amount to apply a tensile force on the wire between the clamp rollers 42 and 32. The clamper 45 closes. The cutter 33 cuts the wire 2a off the bobbin 1a and the clamp rollers 32 open to release one sheared end continuous with the bobbin 1a. The clamp rollers 42 feed the wire 2a upward and then stop feeding when the other sheared end of the wire 2a reaches a position slightly protruded from the clamper 45. This positioning of the sheared tail end is made by controlling the rolling amount of the clamp rollers 42.

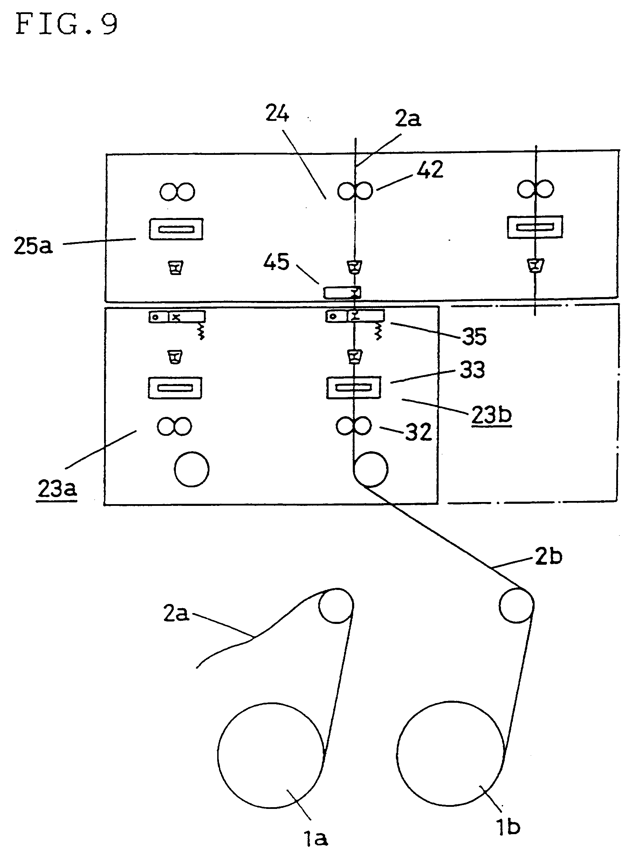

Then, the table 21 moves to the left in the figure and is positioned at its left stroke limit, as shown in Figure 9. At this time, one sheared end of the wire 2a continuous with the bobbin 1a is removed from the incoming unit 23a. The clamper 35 clamping the leading end of the new wire 2b continuous with the bobbin 1b opposes to the clamper 45. The clamp rollers 52 open to remove the remaining wire 2a sheared off the bobbin 1b.

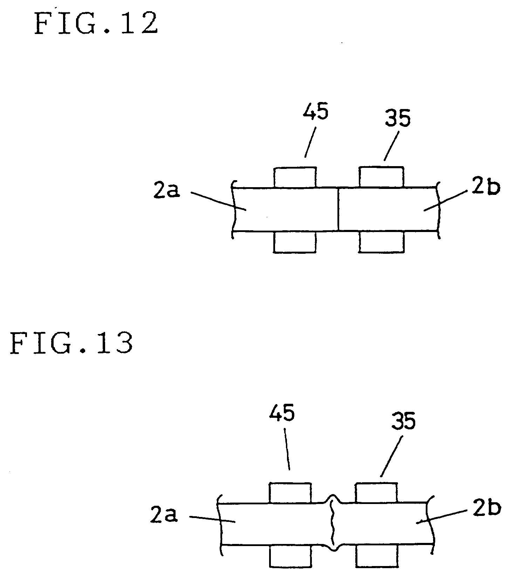

Next, the operations for wire joining and for checking the joining of wires are carried out. The clamp rollers 32 feed the wire 2b upward for a short amount to slightly slacken the wire between the clamp rollers 32 and the clamper 35. The clamper 35 is lifted to the upper position to get the sheared tail end of the wire 2a and the sheared leading end of the wire 2b butted against each other, as shown in Figure 12. The welding current supply device 80 supplies a welding current to the butted wire portion through the clampers 45 and 35 to join the sheared ends of the wires 2a and 2b together, as shown in Figure 13.

The joint of wires has relatively tough tensile strength, but poor flexural strength. The operation for annealing the vicinity of the joint is carried out not to concentrate a bending force on the joint when the joined wire travels through a number of rollers. The clamper 45 opens. First, the annealing current supply device 90 anneals the joined wire between the clamp roller 42 and the clamper 35. After the first annealing the clamper 45 closes and the clamper 35 opens. Second, the annealing current supply device 90 anneals the joined wire between the clamp roller 32 and the clamper 45.

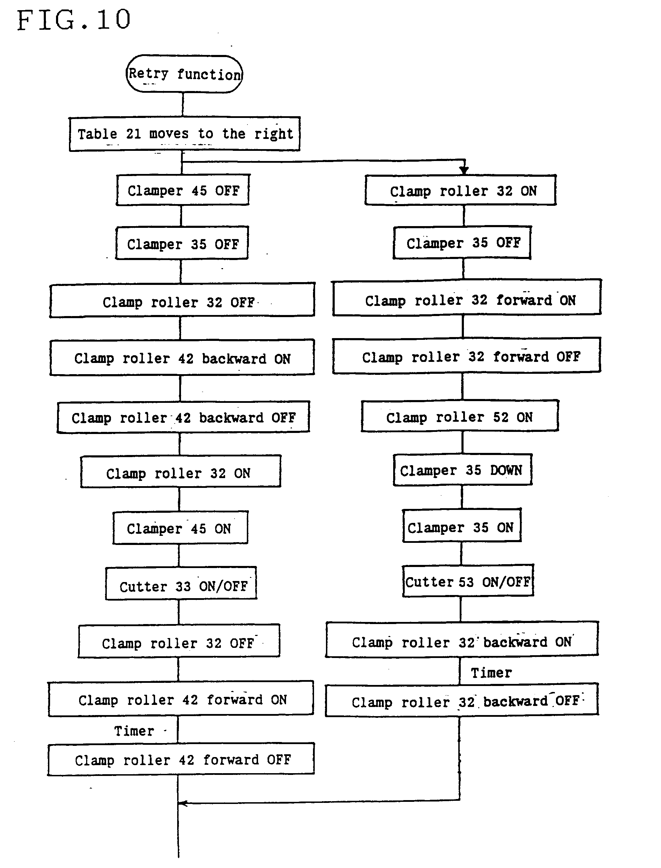

Thereat the clamper 45 opens. The clamp rollers 42 feed the wire upward by a very short amount. The clampers 35 and 45 close and a small current is applied across the clampers 35 and 45 to detect whether the clampers 35 and 45 have a conducted condition or not. If the clamper 35 and 45 are not in a conducted condition indicating a failure of the joining of wires, the table is returned to the right in the figure to initiate a retry operation shown in Figure 10. Alternatively, conductivity between the clamp rollers 42 and 32 may be detected without closing the clamper 35 and 45. Further, instead of detecting conductivity a feed motion of one of the present and new wires 2a and 2b may be detected to check the joining of wires when the other is fed away from the one.

If the clampers 35 and 45 are in a conducted condition indicating that the wires are successfully joined, the joined wire is fed forward into the pipe guide 12 along the wire travelling route releasing all clampers 35 and 45, and pairs of clamp rollers 32 and 42. As shown in Figure 13, the wire joint has a slightly larger diameter. For example, it is no more than 0.3 mm when using a wire with a diameter of 0.2 mm. Therefore, the joined wire can be smoothly fed along the wire travelling route and can pass through the guide 10 attached on the pressured fluid chamber 11. However, it is difficult to pass through wire positioning guides contained in respective wire guide blocks 15 and 17. A wire positioning guide generally has an inner diameter of 0.22 to 0.21 mm when using a wire with a diameter of 0.2 mm. The wire travel stops when the joint reaches the vicinity of the exit of the pipe guide 12 before the cutter 13. The cutter cuts the wire. The preceding part of the cut wire is taken up by the wire take-up device 19 while the following part including the joint is fed forward by a small amount. The wire tip disposer 14 grips the joint around with a hand and the cutter 13 cuts off the joint. The wire tip disposal 14 removes the joint. After that, the wire is threaded into the positioning guides in the wire guide blocks 15 and 17 and the machining slit using the pipe guide 12. The wire travels with the wire take-up device 19. Alternatively, the train of rollers 4 may roll the joint to decrease its diameter so that the wire is fed forward through the positioning guides and the machining slit without removing the joint. It may be especially preferable if the workpiece 16 has a large thickness with a difficulty of wire threading.

While machining is performed using a new travelling wire 2b from the bobbin 1b, the bobbin 1a is dismounted and a new spare bobbin is mounted. The setting operation for a new wire unwound from the new bobbin is carried out using the incoming unit 23a and the preparatory unit 25a with the table 21 positioned at its left stroke limit in the figure, as described in a flowchart of Figure 5. The wire 1b is replaced with the new wire with the same operations as that described above (the moving direction of the table 21 will be reversed) when it is almost empty. By repeating such operations continuous machine operation of an electric discharge machine is enabled.

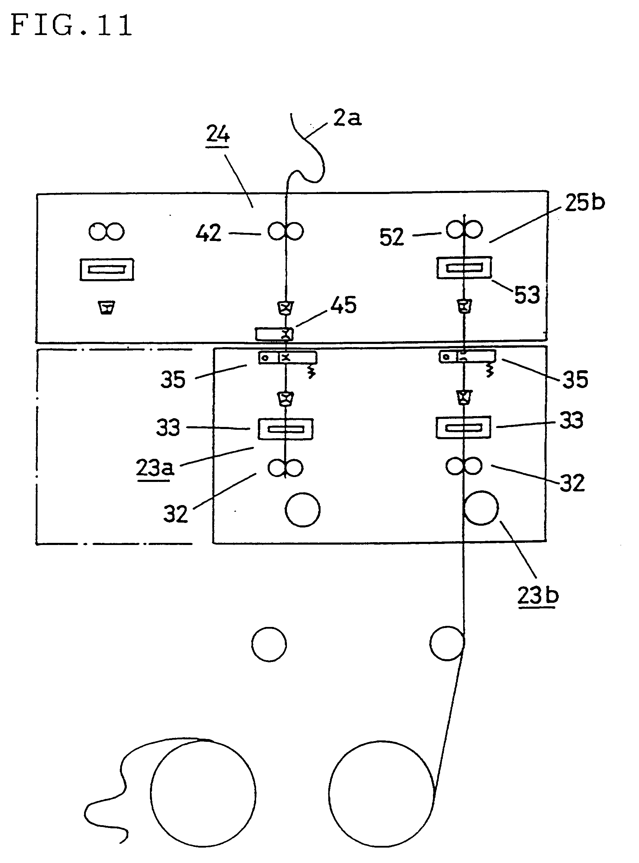

Referring to Figure 10, the retry operation in the case of failed joining is described. In this operation, a process to trim the tail end of the wire 2a and a process to trim the leading end of the wire 2b are carried out in parallel. In Figure 11, the process for the wire 2a is carried out using the incoming unit 23a on the left in the figure and the outgoing unit 24. Returning the table 21 to its right stroke limit to oppose the incoming unit 23a (whereinto the wire is not passed through) to the outgoing unit 24. The clamp rollers 42 feed the tail end of the wire 2a downward the clamp roller 32 with the clampers 35 and 45 and the clamp rollers 32 opened. Then the clamp rollers 42 stop feeding and the clamp rollers 32 pinch the wire 2a.

Next, the clamper 45 closes and the cutter 33 cuts the wire 2a. The clamp rollers 32 open to release the one sheared end of wire. The clamp rollers 42 feed the wire upward to position the other sheared end to be slightly protruded from the clamper 45.

Parallel to the above process, as shown in Figure 11, the process for trimming the leading end of the wire 2b is carried out using the incoming unit 23b on the right side in the figure and the preparatory unit 25b. The incoming unit 23b and the preparatory unit 25b oppose each other with the table 21 at its right stroke limit. The clamp rollers 32 close and feed the leading end of the wire 2b upward the clamp roller 52 with the clampers 35 opened. Then the clamp rollers 32 stop feeding and the clamp rollers 52 pinch the wire 2b.

Next, the clamper 35 is actuated to its lower position and closes and the cutter 53 cuts the wire 2b. The clamp rollers 32 feed the wire downward to position the one sheared end continuous to the bobbin 1b to be slightly protruded from the clamper 35.

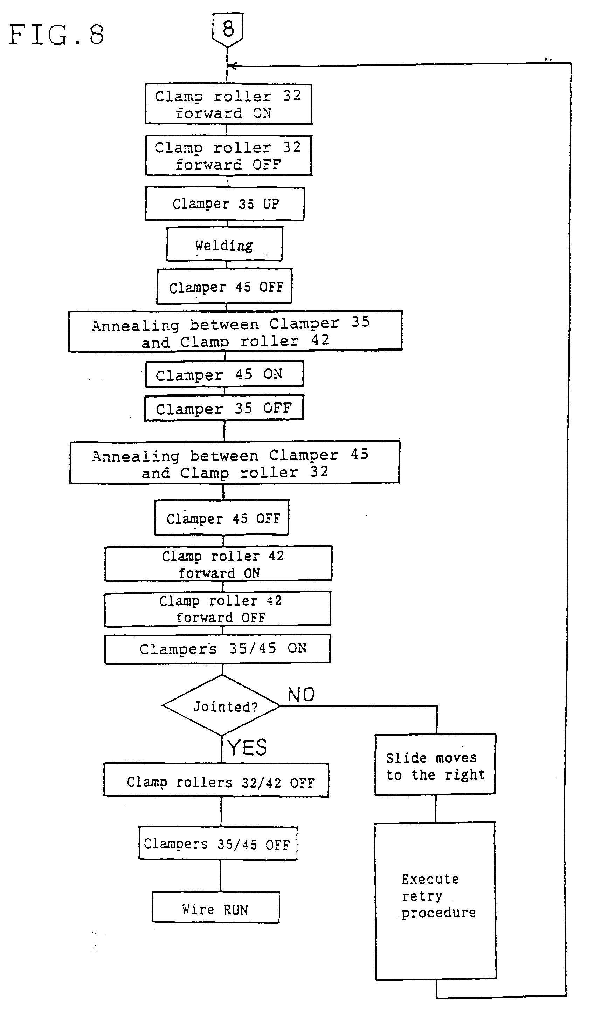

Then, when the above parallel processes have been completed, moving the table to the left stroke limit in the figure and the new sheared ends of wires 2a and 2b are opposed to each other to carry out the joining operation again, as shown in Figures 6 and 8. Times of retry operations to be carried out may be only set by the program in the control unit. According to times of retry operations, the wire of a predetermined length may be only slacken as described above referring to Figure 6.

The forgoing description of a preferred embodiment of the invention has been presented for purposes of illustration and description. It is not intended to be exhaustive or to limit the invention to the precise form disclosed, and obviously many modifications and variations are possible in the light of the above teaching. As non-limiting examples, the bobbins 1a and 1b may be provided on the movable table 21. The clamper 45 in the outgoing unit 24 may advance and retract with respect to the clamper 35 in the incoming unit. When the sheared end of the wire 2b is positioned to slightly protrude from the clamper 35, rolling amounts of the clamp rollers 32 may be controlled.

## Claims

1. A wire refeeding device for a wire-cut electroerosion apparatus having a first wire (2a), a second wire (2b), a first bobbin (1a) carrying said first wire and a second bobbin (1b) carrying said second wire, said first and second bobbins being replaceable with an alternate bobbin for refeeding said second wire forward into a machining slit in a workpiece (16) after stopping the travelling of said first wire along a wire travelling route, comprising:
a first cutter (33) arranged on said wire travelling route for cutting said first wire off said first bobbin, and characterised by
a first clamper (45) arranged on said wire travelling route for clamping a tail end of said first wire;
a table (21) adjacent said first clamper comprising a second clamper (35) for clamping a leading end of said second wire drawn out from said second bobbin along a waiting path (23b), said table being movable to traverse said wire travelling route whereby said first and second clampers are opposed to each other;
a pre-loader (73) for actuating either one of said first and second clampers toward the other to cause the leading end of said second wire and the tail end of said first wire to abut against each other;
a joining circuit (80) for joining the butted wires; and
means (19) for causing the joined wire to travel forward into said machining slit along said wire travelling route.

2. The wire refeeding device of Claim 1, wherein said joining circuit is connected to said first and second clampers to energize the wires therebetween with current.

3. The wire refeeding device of Claim 1 or Claim 2, further comprising a first pair of clamp rollers (42) for feeding said first wire forward/backward so that the tail end thereof is positioned to be slightly protruded from said first clamper.

4. The wire refeeding device of any one of Claims 1 to 3, wherein said table further comprises a second pair of clamp rollers (32) along said first waiting path for feeding said second wire forward/backward so that the leading thereof is positioned to be slightly protruded from said second clamper.

5. The wire refeeding device of any one of Claims 1 to 4, wherein said first cutter is provided on said table.

6. The wire refeeding device of any one of the preceding claims, comprising first tip treatment means (53) for trimming a tip of said second wire fed forward through said first waiting path by said second pair of clamp rollers.

7. The wire refeeding device of any one of the preceding claims, wherein said table further comprises a second cutter (33) along said first waiting path and wherein a third clamper (35) and a third pair of clamp rollers (32) are provided on said table to form a second waiting path with said first cutter.

8. The wire refeeding device of Claim 6 or Claim 7, further comprising a third bobbin replaced with said second bobbin for carrying a third wire and second tip treatment means (53) for trimming a tip of said third wire fed forward along said second waiting path by said third pair of clamp rollers.

9. The wire refeeding device of Claim 6, further comprising an annealing circuit (90) for annealing the joined wire in the vicinity of the joint.

10. The wire refeeding device of Claim 6, further comprising means for decreasing the diameter of the joint of wires whereby the joint may smoothly pass through said machining slit.

11. A wire refeeding method for a wire-cut electroerosion apparatus having a first wire (2a), a second wire (2b), a first bobbin (1a) carrying said first wire, a second bobbin (1b) carrying said second wire, a first clamper and a second clamper, said first and second bobbins being replaceable with an alternate bobbin for refeeding said second wire forward into a machining slit in a workpiece (16) after stopping the travelling of said first wire along a wire travelling route, comprising the steps of:
(a) cutting said first wire off said first bobbin, and characterised by;
(b) clamping a tail end of said first wire on said wire travelling route by said first clamper;
(c) clamping a leading end of said second wire drawn out from said second bobbin outside said wire travelling route by said second clamper;
(d) moving said second clamper to oppose the tail end of said first wire and the leading end of said second wire to each other;
(e) causing the leading end of said second wire and the tail end of said first wire to abut against each other;
(f) joining the butted wires together; and
(g) restarting the travel of the joined wire into said machining slit through said wire travelling route.

12. The wire refeeding method of Claim 11, wherein step (f) comprises energizing the wires between said first and second clampers with current.

13. The wire refeeding method of Claim 11 or 12, further comprising trimming a tip of said second wire prior to the joining of wires.

14. The wire refeeding method of any of Claims 11 to 13, further comprising annealing the joined wire in the vicinity of the joint.

15. The wire refeeding method of any one of Claims 11 to 14, further comprising decreasing the diameter of the joint of wires whereby the joint may smoothly pass through said machining slit.

16. A wire refeeding method as claimed in any one of Claims 11 to 15, further comprising the step of checking the joining of the wires.

17. The wire refeeding method of Claim 16, wherein the checking step comprises detecting the existence of electrical conductivity between said first and second wires applying tensile strength on the joint of wires.

18. The wire refeeding method of Claim 16, wherein the checking step comprises detecting the existence of feed motion of one of said first and second wires when feeding the other wire away from said one wire.

19. The wire refeeding method of any one of Claims 16 to 18, further comprising retrying the butt jointing when a failure of the wire jointing is detected.

20. The wire refeeding method of Claim 19, further comprising trimming tips of said first and second wires prior to the retrying step.

## Patentansprüche

1. Drahtzuführvorrichtung für eine funkenerosive Drahtschneidanlage mit einem ersten Draht (2a), einem zweiten Draht (2b), einer ersten Spule (1a), die den ersten Draht trägt, und einer zweiten Spule (1b), die den zweiten Draht trägt, wobei die erste und die zweite Spule durch eine andere Spule ersetzbar sind, um den zweiten Draht in einen Bearbeitungsschlitz in einem Werkstück (16) hineinzuführen, nachdem die Bewegung des ersten Drahts längs eines Drahtbewegungspfades angehalten wurde, mit:
einem ersten Schneider (33), der am Drahtbewegungspfad angebracht ist, um den ersten Draht von der ersten Spule abzuschneiden, und gekennzeichnet durch
eine erste Klemme (45), die am Drahtbewegungspfad angebracht ist, um das hintere Ende des ersten Drahtes einzuklemmen;
einen Tisch (21), der bei der ersten Klemme angebracht ist, mit einer zweiten Klemme (35) zum Einklemmen des Vorderendes des zweiten Drahtes, der längs eines Wartepfads (23b) von der zweiten Spule abgezogen wird, wobei der Tisch so beweglich ist, daß er den Drahtbewegungspfad quert, wodurch sich die erste und die zweite Klemme einander gegenüberliegen;
einen Vorlader (73) zur Betätigung entweder der ersten oder der zweiten Klemme in Richtung auf die andere zu, um das Anliegen des Vorderendes des zweiten Drahtes am Hinterende des ersten Drahtes zu bewirken;
einen Verbindungskreis (80) zum Verbinden der aneinanderliegenden Drähte und
einer Einrichtung (19), die die Bewegung des verbundenen Drahtes längs des Drahtbewegungspfades in den Bearbeitungsschlitz hinein bewirkt.

2. Drahtzuführvorrichtung nach Anspruch 1, bei der der Verbindungskreis mit der ersten und der zweiten Klemme verbunden ist, um die Drähte zwischen ihnen mit Strom zu versorgen.

3. Drahtzuführvorrichtung nach Anspruch 1 oder 2, die außerdem ein erstes Paar von Klemmrollen (42) aufweist, um den ersten Draht vorwärts/rückwärts zu bewegen, so daß dessen Hinterende ein wenig aus der ersten Klemme hervorragt.

4. Drahtzuführvorrichtung nach einem der Ansprüche 1 bis 3, bei der der Tisch außerdem ein zweites Paar von Klemmrollen (32) längs des ersten Wartepfades aufweist, um den zweiten Draht vorwärts/rückwärts zu führen, so daß dessen vorderes Ende leicht aus der zweiten Klemme hervorragend positioniert wird.

5. Drahtzuführvorrichtung nach einem der Ansprüche 1 bis 4, bei der der erste Schneider auf dem Tisch angebracht ist.

6. Drahtzuführvorrichtung nach einem der vorhergehenden Ansprüche, mit einer ersten Spitzenbehandlungseinrichtung (53) zum Ausrichten einer Spitze des zweiten Drahtes, der längs des ersten Wartepfades durch das zweite Paar von Klemmrollen vorwärtsgeführt wird.

7. Drahtzuführvorrichtung nach einem der vorhergehenden Ansprüche, bei der der Tisch außerdem einen zweiten Schneider (33) am ersten Wartepfad aufweist, und wobei auf dem Tisch eine dritte Klemme (35) und ein drittes Paar von Klemmrollen (32) vorgesehen sind, um zusammen mit dem ersten Schneider einen zweiten Wartepfad zu bilden.

8. Drahtzuführvorrichtung nach Anspruch 6 oder 7, die außerdem eine dritte Spule aufweist, die durch die zweite Spule ersetzt ist, um einen dritten Draht zu halten, sowie eine zweite Spitzenbehandlungseinrichtung (53) zum Ausrichten einer Spitze des dritten Drahts, der durch das dritte Paar von Klemmrollen längs des zweiten Wartepfads vorwärtsgeführt wird.

9. Drahtzuführvorrichtung nach Anspruch 6, die außerdem eine Temperschaltung (90) zum Tempern des verbundenen Drahts in der Nähe der Verbindung aufweist.

10. Drahtzuführvorrichtung nach Anspruch 6, die außerdem eine Einrichtung zur Verminderung des Durchmessers der Verbindungsstelle der Drähte aufweist, wodurch die Verbindung sanft durch den Bearbeitungsschlitz läuft.

11. Drahtzuführverfahren für eine funkenerosive Drahtschneidanlage mit einem ersten Draht (2a), einem zweiten Draht (2b), einer ersten Spule (1a), die den ersten Draht trägt, einer zweiten Spule (1b), die den zweiten Draht trägt, einer ersten Klemme und einer zweiten Klemme, wobei die erste Spule und die zweite Spule durch eine andere Spule ersetzt werden können, um den zweiten Draht vorwärts in einen Bearbeitungsschlitz in einem Werkstück (16) zu führen, nachdem die Bewegung des ersten Drahtes längs eines Drahtbewegungspfades angehalten wurde, mit den Schritten:
(a) Abschneiden des ersten Drahtes von der Spule, und gekennzeichnet durch
(b) Einklemmen des hinteren Endes des ersten Drahtes auf dem Drahtbewegungspfad durch die erste Klemme;
(c) Einklemmen des Vorderendes des zweiten Drahtes, der außerhalb des Drahtbewegungspfades von der zweiten Spule abgezogen wird, durch die zweite Klemme;
(d) Bewegen der zweiten Klemme derart, daß sich das Hinterende des ersten Drahtes und das Vorderende des zweiten Drahtes einander gegenüberliegen;
(e) Herbeiführen des Zustands, daß das Vorderendes des zweiten Drahtes und das Hinterende des ersten Drahtes aneinander anliegen;
(f) Verbinden der aneinanderliegenden Drähte miteinander; und
(g) Wiederaufnahme der Bewegung des verbundenen Drahtes im Bearbeitungsschlitz längs des Drahtbewegungspfades.

12. Drahzuführverfahren nach Anspruch 11, bei dem der Schritt (f) das Zuführen von Strom zum Draht zwischen der ersten und der zweiten Klemme aufweist.

13. Drahtzuführverfahren nach Anspruch 11 oder 12, das außerdem die Ausrichtung einer Spitze des zweiten Drahtes vor der Verbindung der Drähte aufweist.

14. Drahtzuführverfahren nach einem der Ansprüche 11 bis 13, das außerdem das Tempern des verbundenen Drahtes in der Nähe der Verbindung aufweist.

15. Drahtzuführverfahren nach einem der Ansprüche 11 bis 14, das außerdem die Verringerung des Durchmessers der Verbindung der Drähte aufweist, wodurch die Verbindung sanft durch den Bearbeitungsschlitz laufen kann.

16. Drahtzuführverfahren nach einem der Ansprüche 11 bis 15, mit dem weiteren Schritt des Überprüfens der Verbindung der Drähte.

17. Drahtzuführverfahren nach Anspruch 16, bei dem der Überprüfungsschritt die Erfassung des Vorhandenseins von der Kabelverbindung Zugfestigkeit verleihender elektrischer Leitfähigkeit aufweist.

18. Drahtzuführverfahren nach Anspruch 16, bei dem der Überprüfungsschritt die Erfassung des Vorliegens von Zuführbewegung entweder des ersten oder des zweiten Drahtes umfaßt, wenn der andere Draht vom erstgenannten Draht wegbewegt wird.

19. Drahtzuführverfahren nach einem der Ansprüche 16 bis 18, bei dem das Verbinden der Anstoßstelle erneut versucht wird, wenn eine fehlerhafte Drahtverbindung erfaßt wurde.

20. Drahtzuführverfahren nach Anspruch 19, das außerdem das Ausrichten der Spitzen des ersten und des zweiten Drahtes vor dem Schritt des erneuten Versuchens aufweist.

## Revendications

1. Dispositif de déroulement de fil métallique pour un appareil coupe-fil à érosion électrique comportant un premier fil (2a), un deuxième fil (2b), une première bobine (1a) portant ledit premier fil et une deuxième bobine (1b) portant ledit deuxième fil, lesdites première et deuxième bobines étant remplaceables par une autre bobine pour faire avancer ledit deuxième fil dans la fente d'usinage d'une pièce de travail (16), après avoir arrêté la marche dudit premier fil sur un trajet de déplacement, comprenant:
une première tronçonneuse (33) placée sur le trajet dudit fil pour couper ledit premier fil et le détacher de ladite première bobine, et caractérisé par
une première borne de serrage (45) placée sur ledit trajet de déplacement du fil pour maintenir fixe une extrémité de queue dudit premier fil;
une table (21) adjacente à ladite première borne de serrage comprenant une deuxième borne de serrage (35) pour maintenir fixe une extrémité d'entrée dudit deuxième fil tiré de ladite deuxième bobine sur un trajet d'attente (23b), ladite table étant mobile pour pouvoir traverser le trajet dudit fil, faisant que les premier et deuxième bornes de serrages sont opposées l'un à l'autre;
un préchargeur (73) pour mettre en marche l'une ou l'autre des première ou deuxième bornes de serrage l'une vers l'autre de sorte que l'extrémité d'entrée dudit deuxième fil et l'extrémité de queue dudit premier fil se trouvent bout à bout;
un circuit d'assemblage (80) pour raccorder les fils bout à bout; et
un dispositif (19) pour faire avancer le fil raccordé dans ladite fente d'usinage le long dudit trajet du fil.

2. Un dispositif de déroulement de fil métallique selon la revendication 1, dans lequel ledit circuit d'assemblage est connecté à la première et deuxième bornes de serrage pour charger les fils avec du courant électrique.

3. Un dispositif de déroulement de fil métallique selon les revendications 1 ou 2, comprenant de surcroît une première paire de rouleaux de serrage (42) pour faire passer ledit fil en avant/en arrière de façon à ce que l'extrémité de queue soit positionnée de façon à dépasser légèrement de ladite première borne de serrage.

4. Un dispositif de déroulement de fil métallique selon l'une quelconque des revendications 1 à 3, dans lequel ladite table comprend de surcroît une deuxième paire de rouleaux de serrage (32) situés sur ledit trajet d'attente pour faire passer ledit deuxième fil en avant/en arrière de façon à ce que l'extrémité d'entrée soit positionnée de façon à dépasser légèrement de ladite borne de serrage.

5. Un dispositif de déroulement de fil métallique selon l'une quelconque des revendications 1 à 4, dans lequel ladite première tronçonneuse est placée sur ladite table.

6. Un dispositif de déroulement de fil métallique selon l'une quelconque des revendications précédentes, comprenant un premier dispositif de traitement de pointes (53) pour ébarber la pointe dudit deuxième fil avancé le long dudit trajet d'attente par la deuxième paire de rouleaux de serrage.

7. Un dispositif de déroulement de fil métallique selon l'une quelconque des revendications précédentes, dans lequel ladite table comprend de surcroît un deuxième coupe-fil (33) le long dudit trajet d'attente et dans lequel une troisième borne de serrage (35) et une troisième paire de rouleaux de serrage (35) se trouvent sur ladite table pour former un second trajet d'attente avec ledit premier coupe-fil.

8. Un dispositif de déroulement de fil métallique selon les revendications 6 ou 7, comprenant de surcroît une troisième bobine remplacée par ladite deuxième bobine pour porter un troisième fil et un deuxième dispositif de traitement de pointe (53) pour ébarber la pointe dudit troisième fil poussé en avant le long dudit deuxième trajet par ladite troisième paire de rouleaux de serrage.

9. Un dispositif de déroulement de fil métallique selon la revendication 6, comprenant de surcroît un circuit de recuit (90) pour recuire les fils assemblés dans le voisinage du joint.

10. Un dispositif de déroulement de fil métallique selon la revendication 6, comprenant de surcroît un dispositif pour réduire le diamètre du raccord des fils afin que le raccord puisse passer dans la fente d'usinage.

11. Une méthode de déroulement de fil métallique pour un appareil coupe-fil à érosion électrique ayant un premier fil (2a), un deuxième fil (2b), une première bobine (1a) portant ledit premier fil, une deuxième bobine (1b) portant ledit deuxième fil, une première borne de serrage et une deuxième borne de serrage, lesdites première et deuxième bornes de serrage pouvant être remplacées par une autre bobine pour faire avancer ledit deuxième fil dans la fente d'usinage d'une pièce de travail (16) après arrêt du déplacement dudit premier fil sur un trajet de déplacement du fil, comprenant les étapes suivantes:
a) coupe dudit fil métallique le détachant de ladite première bobine, et caractérisée par le fait;
b) de maintenir fixe une extrémité de queue dudit premier fil sur ledit trajet par ladite première borne de serrage;
c) de maintenir fixe une extrémité d'entrée dudit deuxième fil tiré de ladite deuxième bobine en dehors dudit trajet par ladite deuxième borne de serrage;
d) de déplacer ladite deuxième borne de serrage pour mettre face à face l'extrémité de queue dudit premier fil et l'extrémité d'entrée dudit deuxième fil;
e) de faire en sorte que l'extrémité d'entrée dudit deuxième fil et l'extrémité de queue dudit premier fil viennent bout à bout l'une contre l'autre;
f) de raccorder les fils se faisant face ; et
g) de faire démarrer la marche du fil raccordé vers la fente d'usinage sur ledit trajet de fil.

12. Méthode de déroulement de fil métallique selon la revendication 11, dans laquelle l'étape (f) comprend le rechargement des fils entre lesdites première et deuxième bornes de serrage avec du courant électrique.

13. Méthode de déroulement de fil métallique selon les revendications 11 ou 12, comprenant de surcroît l'ébarbage du bout dudit deuxième fil avant d'unir les fils.

14. Méthode de déroulement de fil métallique selon l'une quelconque des revendications 11 à 13, comprenant de surcroît le recuit du fil raccordé dans le voisinage du raccord.

15. Méthode de déroulement de fil métallique selon l'une quelconque des revendications 11 à 14, comprenant de surcroît la réduction du diamètre du raccord des fils pour permettre au raccord de passer sans heurt par ladite fente d'usinage.

16. Méthode de déroulement de fil métallique selon l'une quelconque des revendications 11 à 15, comprenant de surcroît l'étape de vérification du raccord des fils.

17. Méthode de déroulement de fil métallique selon la revendication 16, dans laquelle l'étape de vérification comprend la détection de conductivité électrique entre lesdits premier et deuxième fils par application de force de tension sur le raccord des fils.

18. Méthode de déroulement de fil métallique selon la revendication 16, dans laquelle l'étape de vérification comprend la détection de l'existence de mouvement de déroulement de l'un desdits premier et deuxième fils quand on fait passer l'autre fil loin d'un desdits fils.

19. Méthode de déroulement de fil métallique selon l'une quelconque des revendications 16 à 18, comprenant de surcroît une nouvelle tentative de raccord des bouts de fils si une défaillance du raccord des fils est détectée.

20. La méthode de déroulement de fil métallique selon la revendication 19, comprenant de surcroît l'ébarbage des bouts desdits premier et deuxième fils avant la nouvelle tentative de raccord.
